# FASCICULE DE BREVET EUROPEEN

(11) **EP 3 236 562 B1**
(45) Date de publication et mention de la délivrance du brevet: **28.08.2019**
(21) Numéro de dépôt: 17160993.6
(22) Date de dépôt: 15.03.2017
(51) Int. Cl.: H02K 3/12, H02K 3/50, H02K 3/28, H02K 11/215

(54) **MACHINE ELECTRIQUE TOURNANTE MINIMISANT LES PERTURBATIONS ELECTROMAGNETIQUES SUBIES PAR UN ELEMENT DE MESURE**
ELEKTRISCH UMLAUFENDE MASCHINE, DIE DIE ELEKTROMAGNETISCHEN STÖRUNGEN DURCH EIN MESSELEMENT MINIMIERT
ROTARY ELECTRICAL MACHINE MINIMISING THE ELECTROMAGNETIC INTERFERENCES EXPERIENCED BY A MEASURING ELEMENT

(30) Priorité: 20.04.2016 FR 1653508
(43) Date de publication de la demande: 25.10.2017
(73) Titulaire: VALEO EQUIPEMENTS ELECTRIQUES MOTEUR, 94046 Créteil Cedex (FR)
(72) Inventeur: EL BARAKA, Khadija, 94046 CRETEIL CEDEX (FR); JUGOVIC, Svetislav, 94046 CRETEIL CEDEX (FR)

(56) Documents cités:
- DE-A1-102008 060 262
- DE-A1-102010 040 857
- FR-A1- 2 868 620

## Description

La présente invention porte sur une machine électrique tournante minimisant les perturbations électromagnétiques subies par un élément de mesure.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre sur des paliers par l'intermédiaire de roulements. Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forme un chignon de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un module électrique de commande.

Des connecteurs de liaison réalisent la liaison électrique entre deux épingles d'un même enroulement de phase. Dans certaines configurations, un connecteur de liaison s'étend circonférentiellement en regard d'un élément de mesure permettant de déterminer la position angulaire du rotor de la machine. Toutefois, du fait du courant le traversant, un tel connecteur de liaison génère un champ magnétique perturbant les signaux issus de l'élément de mesure. Le document FR 2868620 décrit une machine associée.

L'invention vise à remédier efficacement à cet inconvénient en proposant une machine électrique tournante comportant:
- un rotor,
- un dispositif de mesure de la position angulaire dudit rotor comportant un élément de mesure apte à générer des signaux de mesure de la position angulaire dudit rotor,
- un stator comportant :
   - un corps de stator comportant une pluralité d'encoches,
   - un bobinage comportant une pluralité d'enroulement de phases ayant chacun une entrée d'enroulement et une sortie d'enroulement,
   - chaque enroulement de phase étant formé par une pluralité d'épingles insérées partiellement dans lesdites encoches et formant un chignon, et
- au moins un connecteur de liaison reliant électriquement deux épingles d'un même enroulement de phase, ces épingles étant espacées angulairement entre elles d'au moins deux épingles consécutives,
ledit connecteur de liaison s'étendant circonférentiellement le long dudit chignon et en regard dudit élément de mesure,
caractérisée en ce que ledit connecteur de liaison comporte une portion située radialement entre une périphérie externe dudit corps de stator et un fond d'encoche.

De tels connecteurs de liaison permettent un positionnement angulaire prédéterminé des sorties de phase d'un même bobinage du stator. Ils permettent par exemple de former un angle de 60° entre chaque sortie de phase d'un même bobinage du stator.

L'invention permet ainsi, en positionnant à distance le connecteur de liaison par rapport à l'élément de mesure, d'éviter les interférences magnétiques entre le connecteur de liaison et les signaux de mesure générés par l'élément de mesure.

Selon une réalisation, le rotor comporte un axe de rotation, la machine étant agencée de sorte qu'il existe un plan passant par l'axe de rotation, ledit plan coupant à la fois l'élément de mesure et ledit connecteur de liaison.

Selon une réalisation, le plan passant par l'axe de rotation coupe à la fois l'élément de mesure et ladite portion du connecteur de liaison située radialement entre une périphérie externe du corps de stator et un fond d'encoche.

Selon une réalisation, ledit connecteur de liaison est situé radialement au moins partiellement entre une périphérie externe dudit corps de stator et ledit chignon.

Selon une réalisation, ledit connecteur de liaison est disposé axialement par rapport à une face d'extrémité axiale dudit corps de stator à une hauteur inférieure ou égale, notamment inférieure strictement, à une hauteur dudit chignon. En variante, dans le cas de chignons de faibles dimensions, la hauteur du connecteur de liaison pourra être supérieure strictement à celle du chignon.

Selon une réalisation, ledit dispositif de mesure de la position angulaire dudit rotor comporte une cible magnétique.

Selon une réalisation, ledit dispositif de mesure de la position angulaire dudit rotor comprend une paroi formant un écran de protection magnétique positionné radialement entre ledit connecteur de liaison et ladite cible magnétique. Cela permet d'éviter que le connecteur de liaison perturbe l'élément de mesure.

Selon une réalisation, ledit connecteur de liaison est disposé axialement par rapport à une face d'extrémité axiale dudit corps de stator à une hauteur inférieure ou égale à une hauteur de ladite paroi formant un écran de protection magnétique.

Selon une réalisation, ladite cible magnétique est disposée radialement entre ladite paroi et ledit élément de mesure.

Selon une réalisation, ledit élément de mesure est un capteur à effet Hall.

Selon une réalisation, au moins deux enroulements de phase sont reliés électriquement entre eux par leur sortie d'enroulement sur un conducteur électrique de liaison d'enroulements, ledit chignon étant disposé radialement entre ledit conducteur électrique de liaison d'enroulements et une périphérie interne dudit corps de stator.

Selon une réalisation, suivant une direction de déplacement radiale, la configuration de ladite machine électrique tournante est telle que l'on rencontre successivement une périphérie externe dudit corps de stator, ledit conducteur électrique de liaison d'enroulements, ledit connecteur de liaison, et ledit chignon.

Selon une réalisation, ledit conducteur électrique de liaison d'enroulements présente une forme en arc de cercle.

Selon une réalisation, la machine électrique tournante comporte une pluralité de connecteurs de liaison. Dans un exemple, la machine électrique tournante comporte 6 connecteurs de liaison. Dans un autre exemple, la machine électrique comporte autant de connecteurs de liaison que d'enroulements de phase.

Selon une réalisation, un unique connecteur de liaison parmi la pluralité comporte une portion située radialement entre une périphérie externe du corps de stator et un fond d'encoche.

Selon une réalisation, plusieurs des connecteurs de liaison parmi la pluralité comportent une portion située radialement entre une périphérie externe du corps de stator et un fond d'encoche.

Selon une réalisation, l'ensemble des connecteurs de liaison comportent une portion située radialement entre une périphérie externe du corps de stator et un fond d'encoche.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale de la machine électrique tournante selon la présente invention;
La figure 2 est une vue en perspective du rotor et du stator de la machine électrique tournante selon la présente invention;
La figure 3 est une vue en perspective détaillée de la partie supérieure de l'ensemble de la figure 2;
La figure 4 est une vue de dessus d'un corps de stator de la machine électrique tournante selon la présente invention.

Les éléments identiques, similaires, ou analogues, conservent la même référence d'une figure à l'autre.

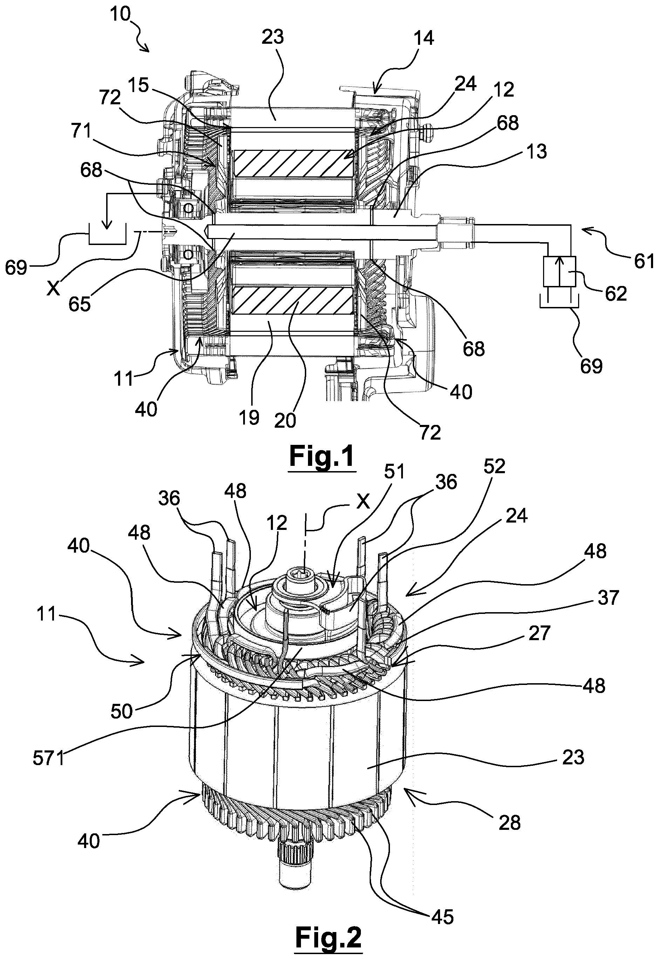

La figure 1 montre une machine électrique tournante 10 comportant un stator 11 polyphasé d'axe X correspondant à l'axe de la machine. Le stator 11 entoure un rotor 12 monté sur un arbre 13 avec présence d'un entrefer 15 entre la périphérie interne du stator 11 et la périphérie externe du rotor 12. Le stator 11 est monté rotatif dans un carter 14.

La machine 10 est apte à fonctionner dans un mode alternateur pour fournir notamment de l'énergie à la batterie et au réseau de bord du véhicule, et le cas échéant dans un mode moteur pour assurer le démarrage du moteur thermique du véhicule, et éventuellement participer à la traction du véhicule seule ou en combinaison avec le moteur thermique.

Plus précisément, le rotor 12 comporte un corps 19 sous la forme d'un paquet de tôles. Des aimants permanents 20 sont implantés dans des cavités du corps 19. Les aimants 20 pourront être en terre rare ou en ferrite selon les applications et la puissance recherchée de la machine 10. Alternativement, les pôles du rotor 12 pourront être formés par des bobines.

Par ailleurs, le stator 11 comporte un corps 23 constitué par un paquet de tôles ainsi qu'un bobinage 24. Le corps 23 est formé par un empilement de feuilles de tôles indépendantes les unes des autres et maintenues sous forme de paquet au moyen d'un système de fixation adapté.

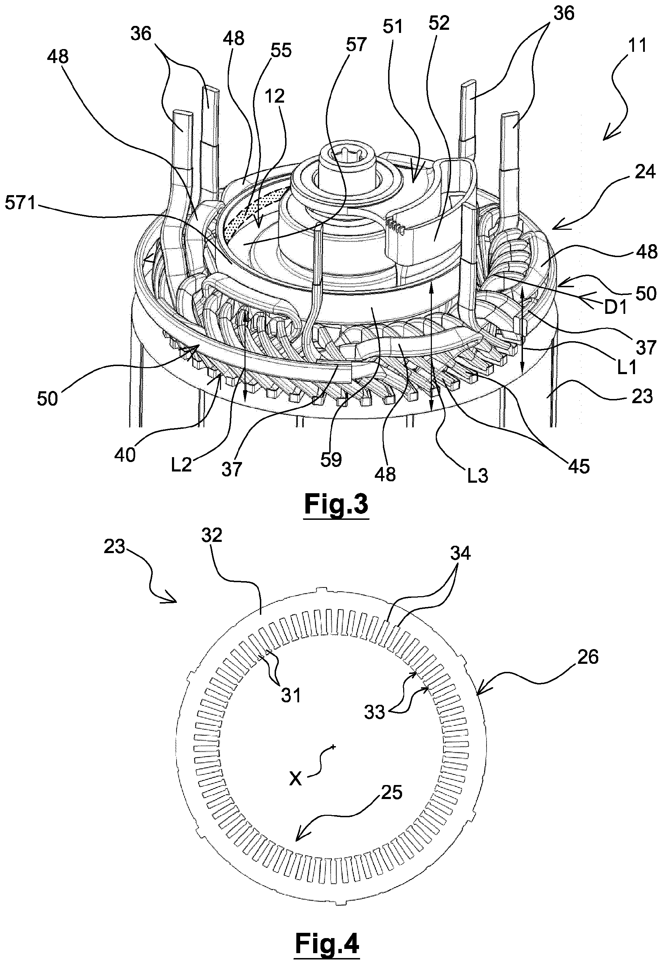

Comme cela est illustré par la figure 4, le corps 23 est délimité par une périphérie interne 25, une périphérie externe 26, ainsi que par deux faces d'extrémité axiale 27, 28, telles que montrées en figure 2. Ce corps 23 est muni de dents 31 s'étendant depuis une périphérie interne d'une culasse annulaire 32 et délimitant deux à deux des encoches 33 pour le montage du bobinage 24. Ainsi, deux encoches 33 successives sont séparées par une dent 31. Les encoches 33 débouchent axialement dans les faces d'extrémité 27, 28 et radialement dans la face cylindrique interne 25 du corps de stator 23.

Comme on peut le voir sur les figures 2 et 3, le bobinage 24 comporte une pluralité d'enroulements de phase insérés dans les encoches 33. L'isolation entre les faces internes des encoches 33 et le bobinage 24 pourra par exemple être réalisée au moyen de papier isolant.

Ces enroulements de phase présentent chacun deux extrémités correspondant respectivement à une entrée d'enroulement de phase 36 et une sortie d'enroulement de phase 37. Chaque enroulement de phase est formé par une pluralité d'épingles 45 reliées entre elles par exemple par des soudures. Les soudures peuvent être des soudures électriques. Les épingles 45 sont insérées partiellement dans les encoches 33 et forment de part et d'autre du corps de stator 23, un chignon 40.

Le bobinage 24 comporte au moins deux enroulements de phase reliés électriquement entre eux par leur sortie d'enroulement 37 sur un conducteur électrique de liaison d'enroulements 50. Un chignon 40 est disposé radialement entre le conducteur électrique de liaison d'enroulements 50 et la périphérie interne du corps de stator 23. Le conducteur 50 présente avantageusement une forme d'arc de cercle.

En l'occurrence, on utilise deux conducteurs électriques de liaison d'enroulements 50. Chaque conducteur électrique de liaison d'enroulement 50 assure la connexion au point neutre de trois sorties d'enroulement 37. Dans ce cas, la machine est alors du type double triphasé. Bien entendu, le nombre de phases de la machine électrique pourra être adapté en fonction de l'application envisagée.

En outre, des connecteurs de liaison 48 relient électriquement deux épingles 45 d'un même enroulement de phase. Les épingles 45 reliées par le connecteur 48 correspondant sont espacées angulairement entre elles d'au moins deux épingles 45 consécutives. Les connecteurs de liaison 48 réalisent la liaison électrique entre les enroulements de phase et un point neutre du bobinage. Les connecteurs de liaison 48 s'étendent circonférentiellement le long du chignon 40 situé du côté de l'élément de mesure 52.

Comme on peut le voir clairement sur la figure 3, la machine électrique 10 comporte en outre un dispositif de mesure 51 d'une position angulaire du rotor 12. Ce dispositif de mesure 51 comportent un élément de mesure 52 apte à générer des signaux de mesure de la position angulaire du rotor, ainsi qu'une cible magnétique annulaire 55 fixée sur un porte-cible 57 solidaire en rotation de l'arbre 13. En l'occurrence, l'élément de mesure 52 est un capteur de type à effet Hall. En variante, l'élément de mesure 52 pourra prendre la forme d'un résolveur.

Sous l'effet de la rotation du porte-cible 57 conjointement avec l'arbre 13, le champ magnétique reçu par le capteur 52 varie. Le capteur 52 est relié à un dispositif électronique de gestion et de commande (non représenté), et transmet à celui-ci des signaux fonction des champs magnétiques reçus. Le dispositif est apte à traiter lesdits signaux pour en déduire la position angulaire ainsi que la vitesse du rotor.

Plus précisément, le porte-cible 57 présente une forme de coupelle. La coupelle comporte à sa périphérie externe une paroi cylindrique 571 d'orientation axiale. La cible magnétique 55 est fixée sur la face annulaire interne de la paroi 571 tournée vers l'arbre 13. Autrement dit, la cible magnétique 55 est disposée radialement entre la paroi 571 et l'élément de mesure 52.

Le connecteur 48 s'étendant circonférentiellement en regard du capteur 42 comporte une portion située radialement entre une périphérie externe du corps de stator 23 et un fond d'encoche 34. Comme montré sur la figure 4, le fond d'encoche 34 correspond à la partie de l'encoche 33 la plus proche de la culasse 32 et reliant deux dents 31 consécutives. La portion du connecteur de liaison 48 susceptible de perturber les mesures de position angulaire du rotor 12 est ainsi éloignée radialement du capteur 42.

Le connecteur de liaison 48 est situé radialement au moins partiellement entre une périphérie externe du corps de stator 23 et le chignon 40 correspondant. De préférence, le connecteur de liaison 48 est disposé axialement par rapport à la face d'extrémité axiale 27 correspondante du corps de stator 23 à une hauteur L1 inférieure ou égale, notamment inférieure strictement, à une hauteur L2 du chignon 40. En variante, dans le cas de chignons de faibles dimensions, la hauteur du connecteur de liaison 48 est supérieure strictement à celle du chignon 40.

Avantageusement, la paroi 571 du porte-cible 57 forme un écran de protection magnétique positionnée radialement entre le connecteur de liaison 48 s'étendant en regard du capteur 52 et la cible magnétique 55. Le connecteur de liaison 48 est disposé axialement par rapport à la face d'extrémité du corps 27 à une hauteur L1 inférieure ou égale à la hauteur L3 de la paroi 571 formant écran de protection magnétique.

De préférence, suivant une direction D1 de déplacement radiale illustrée à la figure 3, on rencontre successivement : la périphérie externe du corps de stator 23, le conducteur électrique de liaison d'enroulements 50, le connecteur de liaison 48, et le chignon 40 correspondant.

Alternativement, plusieurs des connecteurs de liaison 48 parmi la pluralité comportent une portion située radialement entre une périphérie externe du corps de stator 23 et un fond d'encoche 34. Alternativement, l'ensemble des connecteurs de liaison 48 comportent une portion située radialement entre une périphérie externe du corps de stator 23 et un fond d'encoche 34.

Par ailleurs, la machine électrique 10 pourra être refroidie au moyen d'un circuit de refroidissement 61 montré sur la figure 1 permettant l'écoulement d'un liquide de refroidissement, en l'occurrence de l'huile, à l'intérieur de la machine 10. A cet effet, le circuit de refroidissement 61 comporte une pompe 62 acheminant l'huile dans un alésage central 65 réalisé dans l'arbre 13 et vers au moins deux orifices 68 débouchant radialement et disposés axialement de part et d'autre du rotor 12 pour diffuser le liquide de refroidissement à l'intérieur de la machine 10.

Une telle configuration permet ainsi d'acheminer le liquide de refroidissement vers les deux faces d'extrémité axiale du rotor 12. Le circuit de refroidissement fonctionne en boucle fermée, de telle façon que le liquide de refroidissement est prélevée par la pompe 62 dans un réservoir 69 et est récupérée après circulation dans la machine 10 dans ledit réservoir 69.

En outre, le rotor 12 pourra comporter deux flasques 71 plaqués chacun contre une face d'extrémité axiale du rotor 12. Ces flasques 71 assurent une retenue axiale des aimants 20 à l'intérieur des cavités du corps de rotor 19 et servent également à équilibrer le rotor 12. Chaque flasque 71 pourra être muni avantageusement d'au moins un organe de projection 72, constitué par une pale, agencé pour projeter par centrifugation le liquide de refroidissement arrivant sur la face d'extrémité correspondante vers le chignon de bobinage 40.

## Revendications

1. Machine électrique tournante (10) comportant :
- un rotor (12),
- un dispositif de mesure (51) de la position angulaire dudit rotor (12) comportant un élément de mesure (52) apte à générer des signaux de mesure de la position angulaire dudit rotor (12),
- un stator (11) comportant :
- un corps de stator (23) comportant une pluralité d'encoches (33),
- un bobinage (24) comportant une pluralité d'enroulement de phases ayant chacun une entrée d'enroulement (36) et une sortie d'enroulement (37),
- chaque enroulement de phase étant formé par une pluralité d'épingles (45) insérées partiellement dans lesdites encoches (33) et formant un chignon (40), et
- au moins un connecteur de liaison (48) reliant électriquement deux épingles (45) d'un même enroulement de phase, ces épingles (45) étant espacées angulairement entre elles d'au moins deux épingles consécutives, ledit connecteur de liaison (48) s'étendant circonférentiellement le long dudit chignon (40) et en regard dudit élément de mesure (52),
**caractérisée en ce que** ledit connecteur de liaison (48) comporte une portion située radialement entre une périphérie externe dudit corps de stator (23) et un fond d'encoche (34).

2. Machine électrique tournante selon la revendication 1, **caractérisée en ce que** ledit connecteur de liaison (48) est situé radialement au moins partiellement entre une périphérie externe dudit corps de stator (23) et ledit chignon (40).

3. Machine électrique tournante selon la revendication 2, **caractérisée en ce que** ledit connecteur de liaison (48) est disposé axialement par rapport à une face d'extrémité axiale (27) dudit corps de stator (23) à une hauteur (L1) inférieure ou égale, notamment inférieure strictement, à une hauteur (L2) dudit chignon (40).

4. Machine électrique tournante selon l'une quelconque des revendications 1 à 3, **caractérisée en ce que** ledit dispositif de mesure (51) de la position angulaire dudit rotor (12) comporte une cible magnétique (55).

5. Machine électrique tournante selon la revendication 4, **caractérisée en ce que** ledit dispositif de mesure (51) de la position angulaire dudit rotor (12) comprend une paroi (571) formant un écran de protection magnétique positionné radialement entre ledit connecteur de liaison (48) et ladite cible magnétique (55).

6. Machine électrique tournante selon la revendication 5, **caractérisée en ce que** ledit connecteur de liaison (48) est disposé axialement par rapport à une face d'extrémité axiale (27) dudit corps de stator (23) à une hauteur (L1) inférieure ou égale à une hauteur (L3) de ladite paroi (571) formant un écran de protection magnétique.

7. Machine électrique tournante selon la revendication 5 ou 6, **caractérisée en ce que** ladite cible magnétique (55) est disposée radialement entre ladite paroi (571) et ledit élément de mesure (52).

8. Machine électrique tournante selon l'une quelconque des revendications 1 à 7, **caractérisée en ce que** ledit élément de mesure (52) est un capteur à effet Hall.

9. Machine électrique tournante selon l'une quelconque des revendications 1 à 8, **caractérisée en ce qu'**au moins deux enroulements de phase sont reliés électriquement entre eux par leur sortie d'enroulement (37) sur un conducteur électrique de liaison d'enroulements (50), ledit chignon (40) étant disposé radialement entre ledit conducteur électrique de liaison d'enroulements (50) et une périphérie interne dudit corps de stator (23).

10. Machine électrique tournante selon la revendication 9, **caractérisée en ce que**, suivant une direction de déplacement radiale (D1), la configuration de ladite machine électrique tournante (10) est telle que l'on rencontre successivement une périphérie externe dudit corps de stator (23), ledit conducteur électrique de liaison d'enroulements (50), ledit connecteur de liaison (48), et ledit chignon (40).

## Patentansprüche

1. Elektrische umlaufende Maschine (10), umfassend:
- einen Rotor (12),
- eine Messvorrichtung (51) der Winkelposition des Rotors (12), umfassend ein Messelement (52), das zum Erzeugen der Messsignale der Winkelposition des Rotors (12) geeignet ist,
- einen Stator (11), umfassend:
- einen Statorkörper (23), umfassend mehrere Einkerbungen (33),
- eine Wicklung (24), umfassend mehrere Phasenaufwicklungen, die jeweils einen Aufwicklungseingang (36) und einen Aufwicklungsausgang (37) umfassen,
- wobei jede Phasenaufwicklung durch mehrere Nadeln (45) geformt ist, die teilweise in die Einkerbungen (33) eingefügt sind und einen Knoten (40) formen, und
- wenigstens einen Verbindungsstecker (48), der zwei Nadeln (45) einer und derselben Phasenaufwicklung elektrisch verbindet, wobei diese Nadeln (45) winkelförmig untereinander um wenigstens zwei konsekutive Nadeln beabstandet sind, wobei der Verbindungsstecker (48) sich umfangsgemäß entlang dem Knoten (40) und gegenüber dem Messelement (52) erstreckt,
**dadurch gekennzeichnet, dass** der Verbindungsstecker (48) einen Abschnitt umfasst, der radial zwischen einer äußeren Peripherie des Statorkörpers (23) und einem Einkerbungsboden (34) angeordnet ist.

2. Elektrische umlaufende Maschine nach Anspruch 1, **dadurch gekennzeichnet, dass** der genannte Verbindungsstecker (48) radial wenigstens teilweise zwischen einer äußeren Peripherie des Statorkörpers (23) und dem Knoten (40) angeordnet ist.

3. Elektrische umlaufende Maschine nach Anspruch 2, **dadurch gekennzeichnet, dass** der Verbindungsstecker (48) axial im Verhältnis zu einer axialen Endseite (27) des Statorkörpers (23) in einer Höhe (L1) unter oder gleich, insbesondere strikt unter einer Höhe (L2) des genannten Knotens (40) angeordnet ist.

4. Elektrische umlaufende Maschine nach irgendeinem der Ansprüche 1 bis 3, **dadurch gekennzeichnet, dass** die Messvorrichtung (51) der Winkelposition des Rotors (12) ein magnetisches Ziel (55) umfasst.

5. Elektrische umlaufende Maschine nach Anspruch 4, **dadurch gekennzeichnet, dass** die Messvorrichtung (51) der Winkelposition des Rotors (12) eine Wand (571) umfasst, die einen magnetischen Schutzschild formt, der radial zwischen dem Verbindungsstecker (48) und dem magnetischen Ziel (55) positioniert ist.

6. Elektrische umlaufende Maschine nach Anspruch 5, **dadurch gekennzeichnet, dass** der Verbindungsstecker (48) axial im Verhältnis zu einer axialen Endseite (27) des Statorkörpers (23) in einer Höhe (L1) unter oder gleich einer Höhe (L3) der genannten Wand (571) angeordnet ist, die einen magnetischen Schutzschild formt.

7. Elektrische umlaufende Maschine nach Anspruch 5 oder 6, **dadurch gekennzeichnet, dass** das magnetische Ziel (55) radial zwischen der Wand (571) und dem Messelement (52) angeordnet ist.

8. Elektrische umlaufende Maschine nach irgendeinem der Ansprüche 1 bis 7, **dadurch gekennzeichnet, dass** das Messelement (52) ein Halleffektsensor ist.

9. Elektrische umlaufende Maschine nach irgendeinem der Ansprüche 1 bis 8, **dadurch gekennzeichnet, dass** wenigstens zwei Phasenaufwicklungen elektrisch miteinander durch ihren Aufwicklungsausgang (37) auf einem elektrischen Leiter von Aufwicklungsverbindungen (50) verbunden sind, wobei der Knoten (40) radial zwischen dem elektrischen Leiter von Aufwicklungsverbindungen (50) und einer internen Peripherie des Statorkörpers (23) angeordnet ist.

10. Elektrische umlaufende Maschine nach Anspruch 9, **dadurch gekennzeichnet, dass** die Gestaltung der elektrischen umlaufenden Maschine (10) gemäß einer radialen Verschiebungsrichtung (D1) derart ist, dass sukzessive eine äußere Peripherie des Statorkörpers (23), der elektrische Leiter von Aufwicklungsverbindungen (50), der Verbindungsstecker (48) und der Knoten (40) festzustellen sind.

## Claims

1. Rotary electric machine (10) including:
- a rotor (12);
- a device (51) for measuring the angular position of said rotor (12) including a measurement element (52) that is capable of generating measurement signals for the angular position of said rotor (12);
- a stator (11) including:
- a stator body (23) including a plurality of slots (33);
- a coil (24) including a plurality of phase windings each having one winding input (36) and one winding output (37);
- each phase winding being formed of a plurality of pins (45) that are inserted partially into said slots (33) and form a bundle (40); and
- at least one linking connector (48) electrically connecting two pins (45) of one and the same phase winding, these pins (45) being spaced angularly apart from one another by at least two consecutive pins, said linking connector (48) running circumferentially around said bundle (40) and facing said measurement element (52),
**characterized in that** said linking connector (48) includes a portion that is located radially between an outer periphery of said stator body (23) and a slot bottom (34).

2. Rotary electric machine according to Claim 1, **characterized in that** said linking connector (48) is located radially at least partially between an outer periphery of said stator body (23) and said bundle (40).

3. Rotary electric machine according to Claim 2, **characterized in that** said linking connector (48) is arranged axially with respect to an axial end face (27) of said stator body (23) at a height (L1) that is lower than or equal to, in particular strictly lower than, a height (L2) of said bundle (40) .

4. Rotary electric machine according to any one of Claims 1 to 3, **characterized in that** said device (51) for measuring the angular position of said rotor (12) includes a magnetic target (55).

5. Rotary electric machine according to Claim 4, **characterized in that** said device (51) for measuring the angular position of said rotor (12) comprises a wall (571) forming a magnetic protection screen that is positioned radially between said linking connector (48) and said magnetic target (55).

6. Rotary electric machine according to Claim 5, **characterized in that** said linking connector (48) is arranged axially with respect to an axial end face (27) of said stator body (23) at a height (L1) that is lower than or equal to a height (L3) of said wall (571) forming a magnetic protection screen.

7. Rotary electric machine according to Claim 5 or 6, **characterized in that** said magnetic target (55) is arranged radially between said wall (571) and said measurement element (52).

8. Rotary electric machine according to any one of Claims 1 to 7, **characterized in that** said measurement element (52) is a Hall effect sensor.

9. Rotary electric machine according to any one of Claims 1 to 8, **characterized in that** at least two phase windings are electrically connected to one another by their winding outputs (37) via a winding electrical linking conductor (50), said bundle (40) being arranged radially between said winding electrical linking conductor (50) and an inner periphery of said stator body (23).

10. Rotary electric machine according to Claim 9, **characterized in that**, in a radial direction of movement (D1), said rotary electric machine (10) is configured such that an outer periphery of said stator body (23), said winding electrical linking conductor (50), said linking connector (48) and said bundle (40) are encountered in turn.
